# EUROPÄISCHE PATENTSCHRIFT

(11) **EP 4 532 868 B1**
(45) Veröffentlichungstag und Bekanntmachung des Hinweises auf die Patenterteilung: **06.05.2026**
(21) Anmeldenummer: 23729340.2
(22) Anmeldetag: 23.05.2023
(51) Int. Cl.: E04H 12/22, B21D 15/04, B21D 53/24, B21D 53/60, B21H 3/02, E02D 5/28, E02D 5/52, F16B 25/00

(54) **VERFAHREN ZUR HERSTELLUNG EINES SCHRAUBFUNDAMENTES**
METHOD FOR PRODUCING A SCREW FOUNDATION
PROCÉDÉ DE FABRICATION D'UNE VIS DE FONDATION

(30) Priorität: 25.05.2022 DE 102022113309
(43) Veröffentlichungstag der Anmeldung: 09.04.2025
(73) Patentinhaber: Winkelmann Foundation Screw Sp. z o.o., 59 - 200 Legnica (PL)
(72) Erfinder: RUDERT, Bernd, 59229 Ahlen (DE); BUSCH, Martin, 58730 Fröndenberg/Ruhr (DE)
(74) Vertreter: Schneiders & Behrendt Bochum
(86) Internationale Anmeldenummer: PCT/EP2023/063800
(87) Internationale Veröffentlichungsnummer: WO 2023/227609

(56) Entgegenhaltungen:
- WO-A1-2009/112074
- DE-A1- 2 549 230
- DE-B3- 102019 128 030
- US-A1- 2008 008 555

## Beschreibung

Die Erfindung betrifft ein Verfahren zur Herstellung eines Schraubfundamentes zur Befestigung von Elementen in einem Untergrund, bei welchem wenigstens ein erstes zylindrisches Rohr als erste Ausgangsform bereitgestellt wird und das erste Rohr angrenzend an ein vorderes Einführende wenigstens bereichsweise mit einer gewindeartigen Außenkontur zum Einschrauben in den Untergrund versehen wird, wobei in ein hinteres Ende des ersten Rohres durch Umformen eine sternförmige, eine Innen- und Außenverzahnung aufweisende Kontur eingeformt wird.

Schraubfundamente sind in verschiedenen Ausführungen bekannt. Sie können am hinteren Ende zum Einstecken von Pfählen oder Stäben ausgebildet sein oder alternativ am hinteren Ende einen platten- bzw. flanschartigen Befestigungsansatz aufweisen, an dem andere Elemente, z.B. Rahmen od. dgl., befestigt werden können.

Ein Verfahren mit den Merkmalen des Oberbegriffes des Patentanspruches 1 ist aus der nicht vorveröffentlichten Druckschrift DE 10 2021 130 720 B3 bekannt. Aus US 2017 / 0 058 940 A1 ist eine Anordnung zur Verbindung zweier ineinander gesteckter Rohre bekannt. Aus DE 10 2010 010 603 A1 ist ein weiteres Verfahren zur Herstellung von Schraubfundamenten bekannt.

Aus DE 10 2019 128 030 B3 ist ein Verfahren zur Herstellung eines Schraubfundamentes zur Befestigung von Elementen im Erdreich bekannt, bei welchem ein zylindrisches Rohr als Ausgangsform bereitgestellt wird, an das spanlos ein zu einer Einführspitze zulaufender konischer Vorderabschnitt angeformt wird. Dabei wird der Vorderabschnitt wenigstens bereichsweise mit einer gewindeartigen Außenkontur zum Einschrauben in das Erdreich versehen. Wesentlich ist bei diesem Verfahren, dass in ein hinteres Ende des Rohres durch Drückwalzen eine Innenkontur für ein Einschraubwerkzeug eingeformt wird und dass der Vorderabschnitt und die gewindeartige Außenkontur ausschließlich durch Drückwalzen geformt werden. Das Schraubfundament wird somit allein durch Drückwalzen hergestellt, wodurch der Herstellaufwand gering ist und präzise und reproduzierbare Bauteile erzeugt werden können. Dabei kann entweder zunächst die Innenkontur und danach der Vorderabschnitt und die gewindeartige Außenkontur geformt werden oder umgekehrt. Als Ausgangsform kann ein gezogenes oder geschweißtes Rohr verwendet werden.

In der Praxis hat sich herausgestellt, dass bei einem so hergestellten Schraubfundament das vom Einschraubwerkzeug auf die Innenkontur des Schraubfundamentes übertragbare Drehmoment begrenzt ist, so dass das Schraubfundament bei bestimmten Bodenverhältnissen oder bei besonders großer Eindringtiefe weniger geeignet ist.

Aufgabe der Erfindung ist es, ein einfach herstellbares Schraubfundament zu schaffen, das für beliebige Bodenverhältnisse und bevorzugt beliebige Eindringtiefen geeignet ist.

Diese Aufgabe wird bei einem Verfahren der eingangs bezeichneten Art erfindungsgemäß dadurch gelöst, dass in einem ersten Schritt eine sternförmige Vorkontur gegen eine im Inneren des rohrförmigen Endes angeordnete sternförmige Gegenform radial von außen eingeformt wird und in einem zweiten Schritt die sternförmige Vorkontur ohne innere Gegenform radial von außen zur sternförmigen Kontur ausgeformt wird.

Die Kontur am hinteren Ende des Schraubfundamentes wird somit von außen zweistufig spanlos eingeformt, wobei sowohl eine Innen- als auch eine Außenverzahnung gebildet wird. Die Außen- und die Innenverzahnung dienen zur drehfesten Verbindung mit einem Einschraubwerkzeug mit komplementärer Verzahnungskontur. Die Innenverzahnung ist zur drehfesten Aufnahme eines rohrförmigen Verlängerungselementes geeignet, wodurch ein wenigstens zweiteiliges Schraubfundament entsteht. Außerdem ist die Innenverzahnung zur Aufnahme eines platten- bzw. flanschartigen Befestigungsansatzes geeignet, wobei der Befestigungsansatz mit einer der sternförmigen Kontur entsprechenden Kontur ausgerüstet ist. Durch die sternförmige Kontur lassen sich große Drehmomente übertragen, welche ein Einschrauben in Untergründe mit beliebigen Bodenverhältnissen ermöglichen. Die sternförmige Kontur kann so ähnlich gestaltet sein wie ein Schraubenmitnahmeprofil mit der Normbezeichnung "Innensechsrund" bzw. "Außensechsrund", wobei die Zähneanzahl aber beliebig ist.

Dabei ist bevorzugt vorgesehen, dass die sternförmige Vorkontur und die sternförmige Kontur am hinteren Ende des ersten Rohres von mehreren auf einem gemeinsamen Umfang angeordneten und gleichmäßig radial zustellbaren Umformwerkzeugen eingeformt werden. Die Umformwerkzeuge können z.B. Drück- oder Presswerkzeuge sein.

Dabei ist vorteilhaft vorgesehen, dass die sternförmige Kontur ausgehend vom hinteren Ende in axialer Längsrichtung des ersten Rohres konisch zulaufend geformt wird. Der Innenquerschnitt der sternförmigen Kontur verringert sich somit ausgehend vom hinteren Ende in Längsrichtung. Die Umformwerkzeuge sind dementsprechend komplementär geformt.

Es kann vorgesehen sein, dass das hintere rohrförmige Ende vor der Einformung der sternförmigen Vorkontur radial aufgeweitet wird. Dazu wird das rohrförmige Ende während der Umformung z.B. axial durch mehrere Spannbacken gehalten. Ein geführter Aufweitdorn wird in das Rohr geschoben und erweitert auf diese Weise das Rohrende. Diese Umformung kann auch mehrstufig, also mit mehreren Aufweitdornen erfolgen, die sukzessive größer sind. Alternativ kann auch vorgesehen sein, dass das rohrförmige Ende eingezogen, also sein Durchmesser verringert wird. Dazu wird z.B. ein geführter Einziehring axial über das Rohr geschoben und reduziert auf diese Weise das Rohrende.

In den meisten Anwendungsfällen ist vorgesehen, dass an das erste Rohr spanlos ein zu einer Einführspitze zulaufender konischer Vorderabschnitt angeformt wird, wobei der Vorderabschnitt wenigstens bereichsweise mit der gewindeartigen Außenkontur zum Einschrauben in den Untergrund versehen wird. Beim Einschrauben wird durch die länger oder kürzer ausgebildete gewindeartige Außenkontur das Untergrundmaterial nach außen verdrängt und verdichtet, was den Halt des Schraubfundamentes im Untergrund verbessert.

Zur Vereinfachung der Herstellung ist besonders bevorzugt vorgesehen, dass der Vorderabschnitt durch Formpressen mit oder ohne Wärmebeaufschlagung erzeugt wird. Anschließend wird die Außenkontur durch Drückwalzen eingebracht. Das Formpressen kann auch mehrstufig erfolgen.

In ganz besonders bevorzugter Ausgestaltung ist vorgesehen, dass wenigstens ein zweites zylindrisches Rohr als zweite Ausgangsform bereitgestellt wird und dass in die beiden rohrförmigen Enden des zweiten Rohres jeweils eine sternförmige, eine Innen- und Außenverzahnung aufweisende Kontur eingeformt wird, wobei in einem ersten Schritt jeweils eine sternförmige Vorkontur gegen eine im Inneren des rohrförmigen Endes angeordnete sternförmige Gegenform radial von außen eingeformt wird und in einem zweiten Schritt jeweils die sternförmige Vorkontur ohne innere Gegenform radial von außen zur sternförmigen Kontur ausgeformt wird, wobei die Kontur an einem Ende des zweiten Rohres der Kontur am hinteren Ende des ersten Rohres entspricht und die Kontur am anderen Ende des zweiten Rohres so ausgebildet ist, dass das andere Ende des zweiten Rohres kraft- und/oder formschlüssig in oder auf das hintere Ende des ersten Rohres steckbar ist. Das Schraubfundament besteht dann vorteilhaft aus wenigstens zwei Teilen, nämlich dem aus dem ersten Rohr hergestellten Element und wenigstens einem rückseitig in das vorgenannte Element drehfest einsteckbaren Verlängerungselement. Das zweite Rohr wird darüber hinaus ebenfalls bevorzugt wenigstens bereichsweise mit einer gewindeartigen Außenkontur zum Einschrauben in den Untergrund versehen, z.B. durch Drückwalzen. Die gewindeartige Außenkontur kann aber auch entfallen. Um zu gewährleisten, dass die Gewindegänge der gewindeartigen Außenkonturen des ersten und des wenigstens einen zweiten Rohres beim Ineinanderstecken keinen Versatz aufweisen, wird bevorzugt in die sternförmigen Konturen eine Positionierhilfe eingeformt.

Dabei kann vorteilhaft vorgesehen sein, dass die ineinandergesteckten Enden des ersten und des zweiten Rohres im Bereich der sternförmigen Konturen durch wenigstens eine quer zur Längsachse des ersten und des zweiten Rohres erstreckte Verschraubung aneinander gesichert werden. Dies kann bei der Montage erfolgen, wenn z.B. das erste Rohr bereits weitgehend in den Untergrund eingeschraubt ist und aus diesem nur noch mit seinem hinteren Ende herausragt. Das zweite Rohr kann dann aufgesteckt und anschließend mit der Querverschraubung gesichert werden. Auch eine Verclinchung ist möglich.

Die Erfindung ist nachstehend anhand der Zeichnung beispielhaft näher erläutert. Diese zeigt in
- Fig. 1: eine perspektivische Darstellung eines Schraubfundamentes,
- Fig. 2: eine vergrößerte Darstellung des hinteren Endes des Schraubfundamentes nach Fig. 1,
- Fig. 3: einen Querschnitt eines zylindrischen Rohres als erste Ausgangsform,
- Fig. 4: einen Querschnitt durch das hintere Rohrende des Schraubfundamentes während eines ersten Umformschrittes,
- Fig. 5: einen Querschnitt durch das hintere Rohrende des Schraubfundamentes während eines zweiten Umformschrittes,
- Fig. 6: einen Querschnitt durch das hintere Rohrende des Schraubfundamentes nach der Umformung,

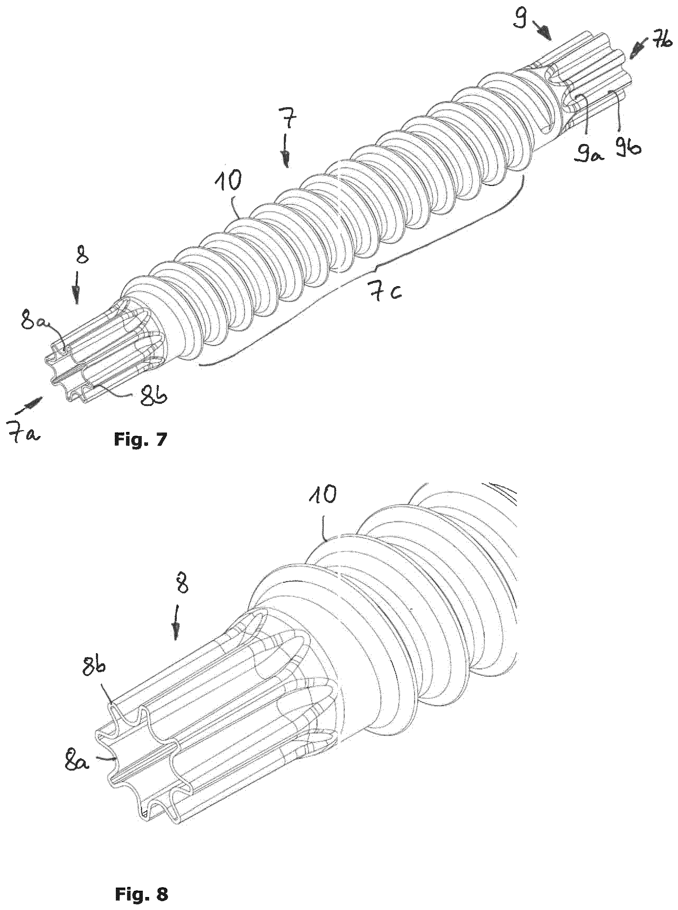

- Fig. 7: eine perspektivische Darstellung eines rohrförmigen Verlängerungselementes zur Bildung eines zweiteiligen Schraubfundamentes,
- Fig. 8: eine perspektivische Darstellung des vorderen Endes des Verlängerungselementes nach Fig. 7,
- Fig. 9: eine perspektivische Explosionsdarstellung eines zweiteiligen Schraubfundamentes vor dem Zusammenfügen,
- Fig. 10: ein vergrößertes Detail der Fig. 9,
- Fig. 11: in perspektivischer Darstellung den Verbindungsbereich des zweiteiligen Schraubfundamentes nach dem Zusammenfügen,
- Fig. 12: einen Längsschnitt durch ein Rohrende während des Aufweitens,
- Fig. 13: einen Längsschnitt durch ein Rohrende während des Einziehens,
- Fig. 14: einen Längsschnitt durch ein Rohrende während des Formpressens zur Ausformung eines konisch zulaufenden Vorderabschnittes,
- Fig. 15: einen Längsschnitt durch ein Schaubfundament nach der Anformung einer Außenkontur und in
- Fig. 16: einen Längsschnitt durch das fertiggestellte Schraubfundament.

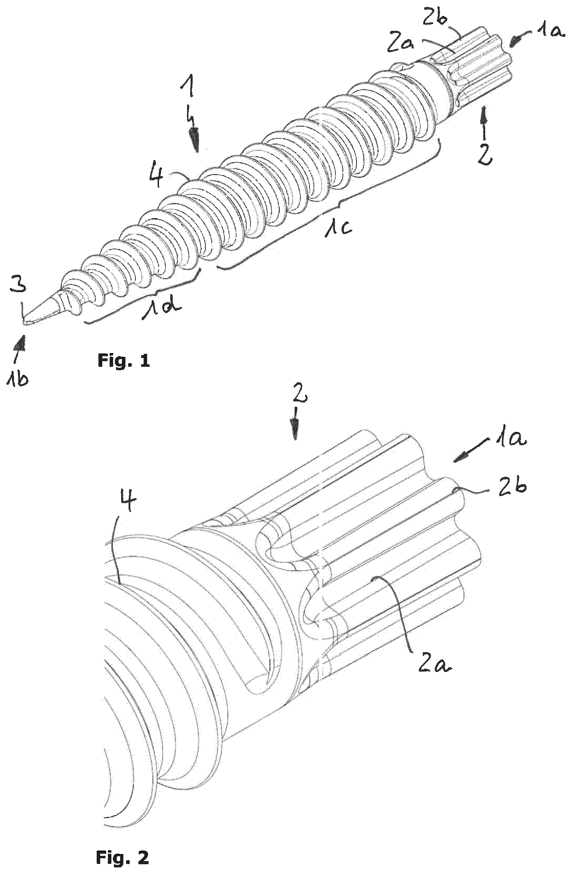

Ein einteiliges Schraubfundament ist in Fig. 1 allgemein mit 1 bezeichnet. Dieses Schraubfundament 1 weist beim Ausführungsbeispiel nach Fig. 1 ein hinteres Ende 1a und ein vorderes Einführende 1b auf. In das hintere, rohrförmige Ende 1a ist eine nachfolgend näher beschriebene sternförmige Kontur 2 eingeformt. Axial angrenzend an diese sternförmige Kontur 2 weist das Schraubfundament 1 einen zylindrischen Bereich 1c und daran nach vorne angrenzend einen zu einer Einführspitze 3 am vorderen Einführende 1b konisch zulaufenden Vorderabschnitt 1d auf.

Sowohl der Vorderabschnitt 1d als auch der zylindrische Bereich 1c sind zumindest bereichsweise mit einer gewindeartigen Außenkontur 4 versehen, welche vorzugsweise ausschließlich durch Drückwalzen geformt wird. Zur näheren Erläuterung wird hierzu auf die Druckschrift DE 10 2019 128 030 B3 verwiesen.

Zur Herstellung des insoweit beschriebenen Schraubfundamentes 1 wird ein erstes zylindrisches Rohr 5 als erste Ausgangsform bereitgestellt. Dieses Rohr 5 kann ein gezogenes oder geschweißtes Rohr aus Metall sein.

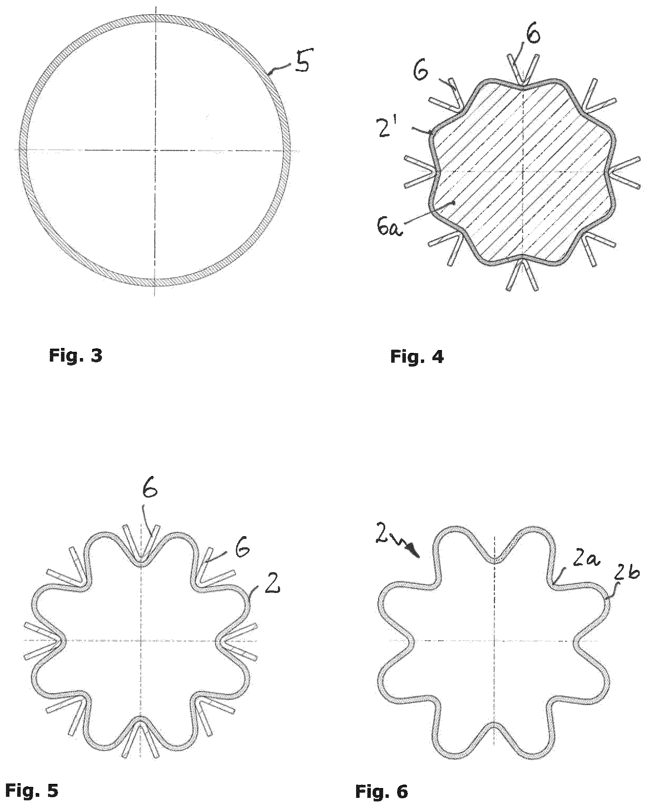

Verfahrensmäßig wird in das eine Ende des Rohres 5, welches das hintere Ende 1a des Schraubfundamentes 1 bildet, die sternförmige Kontur 2 eingeformt, und zwar derart, dass es eine Innenverzahnung 2a und eine Außenverzahnung 2b aufweist. Dazu wird das hintere Ende des ersten Rohres 5 in eine geeignete Umformeinrichtung eingeführt, welche mehrere, auf einem gemeinsamen Umfang angeordnete und gleichmäßig radial zustellbare Umformwerkzeuge 6 aufweist (Fig. 4). In einem ersten Schritt wird eine sternförmige Vorkontur 2' gegen eine im Inneren des rohrförmigen Endes angeordnete sternförmige Gegenform 6a radial von außen mittels der radial nach innen zustellenden Umformwerkzeuge 6 eingeformt (Fig. 4). Anschließend wird die Gegenform 6a entfernt und in einem zweiten Schritt wird die sternförmige Vorkontur 2' ohne die innere Gegenform 6a radial von außen zur sternförmigen Kontur 2 ausgeformt, indem die Umformwerkzeuge 6 erneut radial nach innen zugestellt werden (Fig. 5).

Die Umformwerkzeuge 6 werden jeweils gleichmäßig auf das Ende des ersten Rohres 5 radial nach innen verfahren, so dass sich die sternförmige, eine Innenverzahnung 2a und eine Außenverzahnung 2b aufweisende Kontur 2 ausbildet (Fig. 6). Dabei ändert sich die Wandstärke des ersten Rohres 5 im Wesentlichen nicht.

Nach Einformung der sternförmigen Kontur 2 wird das erste Rohr 5 bevorzugt mit seinem hinteren Ende mit der sternförmigen Kontur 2 in ein komplementär gestaltetes Einspann- und Haltewerkzeug einer Drückwalzmaschine eingesetzt. Anschließend wird das erste Rohr 5 bevorzugt durch Drückwalzen in die in Fig. 1 dargestellte Form des fertigen Schraubfundamentes 1 umgeformt, wobei für die Ausführung der Drückwalzvorgänge auf die Druckschrift DE 10 2019 128 030 B3 Bezug genommen wird. Dabei kann das Rohr 5 ggf. zunächst abgestreckt werden, auf ein Abstrecken kann aber auch verzichtet werden. Nach dem Ende des Drückwalzens wird die Einführspitze 3 auf geeignete Weise verschlossen. Alternativ kann auch zunächst die gewindeartige Außenkontur 4 und danach die sternförmige Kontur 2 geformt werden.

Die sternförmige Kontur 2 am hinteren Endes 1a des Schraubfundamentes 1 weist eine doppelte Funktion auf. Die Außenverzahnung 2b dient zur Verbindung mit einem entsprechend komplementär gestalteten, nicht dargestellten Einschraubwerkzeug. Die Innenverzahnung 2a dient demgegenüber zur kraft- und/ oder formschlüssigen Aufnahme eines rohrförmigen Verlängerungselementes 7 zur Bildung eines zweiteiligen Schraubfundamentes 1.

Zur Herstellung des rohrförmigen Verlängerungselementes 7 wird ein zweites zylindrisches Rohr als zweite Ausgangsform bereitgestellt. Sowohl in das vordere Ende 7a als auch in das hintere Ende 7b des Verlängerungselementes 7 wird in gleicher Weise wie in den Fig. 4 bis 6 dargestellt eine sternförmige Kontur 8, 9 jeweils mit einer Innenverzahnung 8a, 9a und einer Außenverzahnung 8b, 9b durch zweistufiges radiales Eindrücken von außen mit und ohne innere Gegenform ausgebildet.

Dabei ist die Kontur 8 am vorderen Ende 7a des Verlängerungselementes 7 so dimensioniert, dass das vordere Ende 7a kraft- und/oder formschlüssig in das hintere Ende 1a des Schraubfundamentes 1 eingeführt werden kann. Demgegenüber entspricht die sternförmige Kontur 9 am hinteren Ende 7b der sternförmigen Kontur 2 des Schraubfundamentes 1, so dass das hintere Ende 7b des Verlängerungselementes 7 dazu geeignet ist, einerseits mit dem Einschraubwerkzeug gekoppelt zu werden oder andererseits ein weiteres Verlängerungselement 7 aufzunehmen.

Der zylindrische Bereich 7c zwischen den beiden Enden 7a und 7b des Verlängerungselementes 7 wird bevorzugt ebenfalls durch Drückwalzen mit einer gewindeartigen Außenkontur 10 versehen.

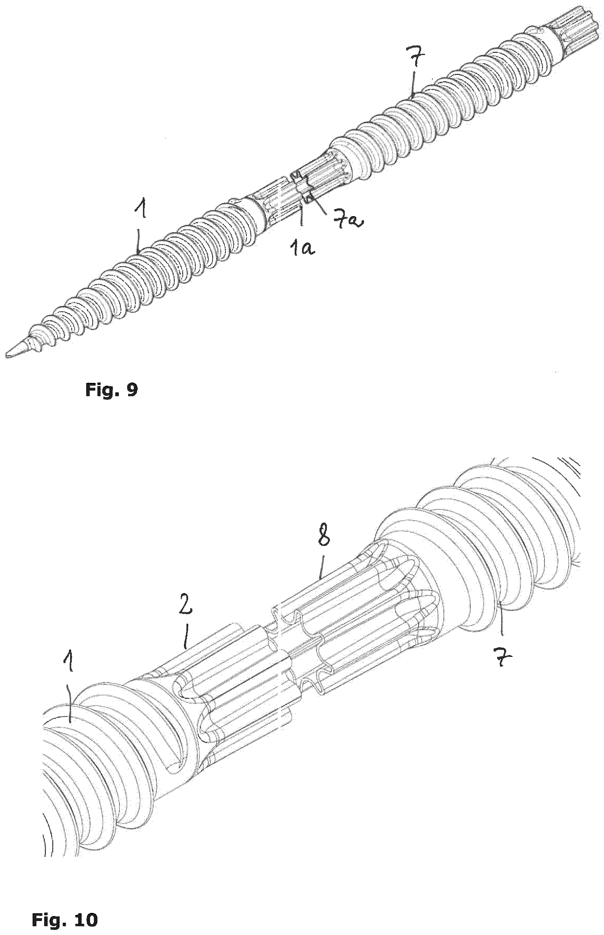

Wenn ein zwei- oder mehrteiliges Schraubfundament 1 eingesetzt werden soll, das aus dem Schraubfundament 1 nach Fig. 1 und wenigstens einem Verlängerungselement 7 besteht, wird am Einsatzort das vordere Ende 7a des Verlängerungselementes 7 gemäß der Abfolge der Fig. 9 bis 11 in das hintere Ende 1a des Schraubfundamentes 1 form- und/oder kraftschlüssig eingesteckt.

Um eine sichere Verbindung zu erreichen, können die ineinander gesteckten Enden 1a, 7a im Bereich der sternförmigen Konturen 2, 8 durch wenigstens eine quer zur Längsachse des ersten und des zweiten Rohres erstreckte Verschraubung aneinander gesichert werden. Alternativ ist auch eine Verclinchung möglich.

In das hintere Ende 1a oder 7b kann auch ein nicht dargestellter platten- bzw. flanschartiger Befestigungsansatz eingesteckt und ggf. verriegelt werden, wobei der Befestigungsansatz mit einer der sternförmigen Kontur 8 entsprechenden Kontur ausgerüstet ist. Der Befestigungsansatz mit sternförmiger Kontur kann z.B. durch Tiefziehen hergestellt werden. An einem solchen Befestigungsansatz können andere Elemente, z.B. Rahmen od. dgl., befestigt werden.

Das erste Rohr 5 für das Schraubfundament 1 oder das zweite Rohr für das rohrförmige Verlängerungselement 7 können vor der Einformung der sternförmigen Kontur 2, 8, 9 am betreffenden Ende umgeformt, nämlich aufgeweitet oder eingezogen werden.

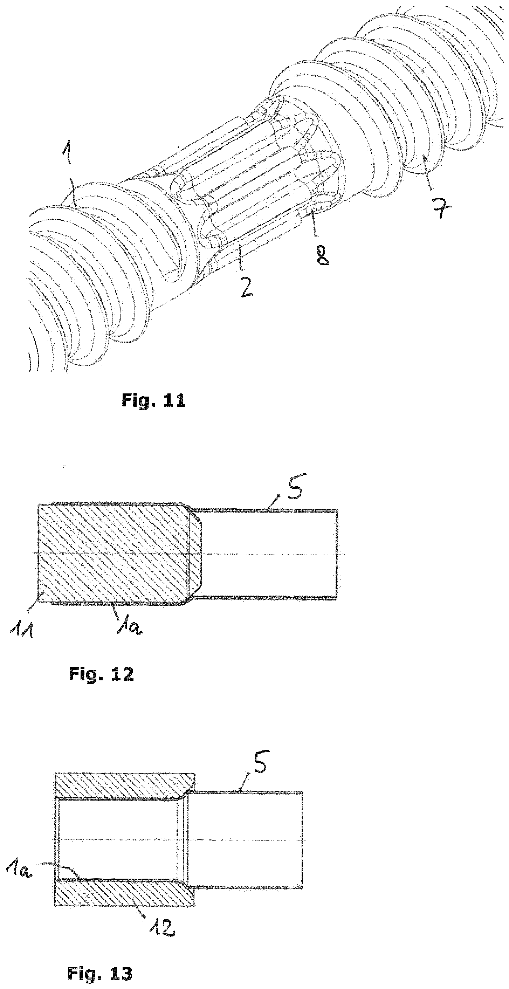

In Fig. 12 ist dargestellt, wie das hintere rohrförmige Ende 1a des ersten Rohres 5 vor der Einformung der sternförmigen Vorkontur 2' radial aufgeweitet wird.

Dazu wird das hintere rohrförmige Ende 1a während der Umformung z.B. axial durch mehrere, nicht dargestellte Spannbacken gehalten. Ein geführter Aufweitdorn 11, der einen größeren Außendurchmesser als der Innendurchmesser des Rohres 5 aufweist, wird in axialer Richtung in das Rohr 5 geschoben und erweitert auf diese Weise das Rohrende.

Alternativ kann gemäß Fig. 13 auch vorgesehen sein, dass das rohrförmige Ende 1a eingezogen, also sein Durchmesser verringert wird. Dazu wird z.B. ein geführter Einziehring 12 axial über das Rohr 5 geschoben und reduziert auf diese Weise das Rohrende.

Das Aufweiten oder Einziehen kann je nach Bedarf auch beim rohrförmigen Verlängerungselement 7 ein- oder beidseitig in gleicher Weise durchgeführt werden.

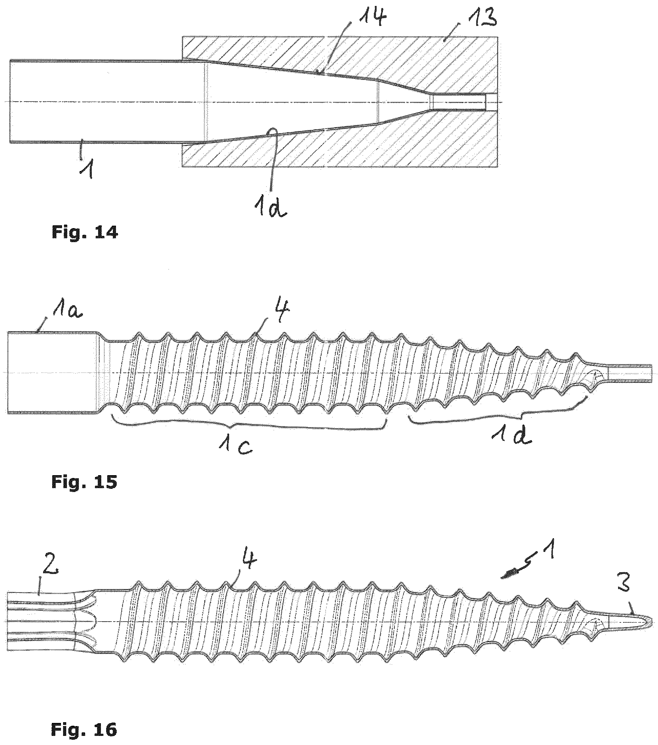

Der konisch zulaufende Vorderabschnitt 1d des Schraubfundamentes 1 kann durch Formpressen erzeugt werden. Dazu kann gemäß Fig. 14 ein Formwerkzeug 13 mit einer konisch zulaufenden Innenausnehmung 14 in axialer Richtung ein- oder mehrstufig gegen das vordere Einführende 1b verfahren werden.

Anschließend wird durch Drückwalzen die gewindeartige Außenkontur 4 eingeformt und dabei der konisch zulaufende Vorderabschnitt 1d weiter ausgeformt (Fig. 15).

In Fig. 16 ist das fertige Schraubfundament 1 dargestellt, wobei auch die Spitze 3 verschlossen ist, z.B. durch Zusammendrücken und ggf. Verschweißen.

### Bezugszeichenliste:

- 1: Schraubfundament
- 1a: hinteres Ende
- 1b: vorderes Einführende
- 1c: zylindrischer Bereich
- 1d: konischer Vorderabschnitt
- 2: sternförmige Kontur
- 2': sternförmige Vorkontur
- 2a: Innenverzahnung
- 2b: Außenverzahnung
- 3: Einführspitze
- 4: gewindeartige Außenkontur
- 5: erstes zylindrisches Rohr
- 6: Umformwerkzeug
- 6a: sternförmige Gegenform
- 7: rohrförmiges Verlängerungselement
- 7a: vorderes Ende
- 7b: hinteres Ende
- 7c: zylindrischer Bereich
- 8: sternförmige Kontur
- 8a: Innenverzahnung
- 8b: Außenverzahnung
- 9: sternförmige Kontur
- 9a: Innenverzahnung
- 9b: Außenverzahnung
- 10: gewindeartige Außenkontur
- 11: Aufweitdorn
- 12: Einziehring
- 13: Formwerkzeug
- 14: Innenausnehmung

## Patentansprüche

1. Verfahren zur Herstellung eines Schraubfundamentes (1) zur Befestigung von Elementen in einem Untergrund, bei welchem wenigstens ein erstes zylindrisches Rohr (5) als erste Ausgangsform bereitgestellt wird und das erste Rohr (5) angrenzend an ein vorderes Einführende (1b) wenigstens bereichsweise mit einer gewindeartigen Außenkontur (4) zum Einschrauben in den Untergrund versehen wird, wobei in ein hinteres Ende (1a) des ersten Rohres (5) durch Umformen eine sternförmige, eine Innen- und Außenverzahnung (2a,2b) aufweisende Kontur (2) eingeformt wird, wobei in einem ersten Schritt eine sternförmige Vorkontur (2') gegen eine im Inneren des rohrförmigen Endes (1a) angeordnete sternförmige Gegenform (6a) radial von außen eingeformt wird und in einem zweiten Schritt die sternförmige Vorkontur (2') ohne innere Gegenform radial von außen zur sternförmigen Kontur (2) ausgeformt wird.

2. Verfahren nach Anspruch 1,
**dadurch gekennzeichnet,**
**dass** die sternförmige Vorkontur (2') und die sternförmige Kontur (2) am hinteren Ende (1a) des ersten Rohres (5) von mehreren auf einem gemeinsamen Umfang angeordneten und gleichmäßig radial zustellbaren Umformwerkzeugen (6) eingeformt werden.

3. Verfahren nach Anspruch 1 oder 2,
**dadurch gekennzeichnet,**
**dass** die sternförmige Kontur (2) ausgehend vom hinteren Ende (1a) in axialer Längsrichtung des ersten Rohres (5) konisch zulaufend geformt wird.

4. Verfahren nach einem oder mehreren der Ansprüche 1 bis 3,
**dadurch gekennzeichnet,**
**dass** das hintere rohrförmige Ende (1a) vor der Einformung der sternförmigen Vorkontur (2') radial aufgeweitet wird.

5. Verfahren nach einem oder mehreren der Ansprüche 1 bis 4,
**dadurch gekennzeichnet,**
**dass** an das erste Rohr (5) spanlos ein zu einer Einführspitze (3) zulaufender konischer Vorderabschnitt (1d) angeformt wird, wobei der Vorderabschnitt (1d) wenigstens bereichsweise mit der gewindeartigen Außenkontur (4) zum Einschrauben in den Untergrund versehen wird.

6. Verfahren nach Anspruch 5,
**dadurch gekennzeichnet,**
**dass** der Vorderabschnitt (1d) durch Formpressen mit oder ohne Wärmebeaufschlagung erzeugt wird.

7. Verfahren nach einem oder mehreren der Ansprüche 1 bis 6,
**dadurch gekennzeichnet,**
**dass** wenigstens ein zweites zylindrisches Rohr als zweite Ausgangsform bereitgestellt wird und dass in die beiden rohrförmigen Enden (7a,7b) des zweiten Rohres jeweils eine sternförmige, eine Innen- und Außenverzahnung (8a,8b,9a, 9b) aufweisende Kontur (8,9) eingeformt wird, wobei in einem ersten Schritt jeweils eine sternförmige Vorkontur gegen eine im Inneren des rohrförmigen Endes angeordnete sternförmige Gegenform radial von außen eingeformt wird und in einem zweiten Schritt jeweils die sternförmige Vorkontur ohne innere Gegenform radial von außen zur sternförmigen Kontur ausgeformt wird, wobei die Kontur (9) an einem Ende (7b) des zweiten Rohres der Kontur (2) am hinteren Ende (1a) des ersten Rohres entspricht und die Kontur (8) am anderen Ende (7a) des zweiten Rohres so ausgebildet ist, dass das andere Ende (7a) des zweiten Rohres kraft- und/oder formschlüssig in oder auf das hintere Ende (1a) des ersten Rohres steckbar ist.

8. Verfahren nach Anspruch 7,
**dadurch gekennzeichnet,**
**dass** die ineinander gesteckten Enden (1a,7a) des ersten und des zweiten Rohres im Bereich der sternförmigen Konturen (2,8) durch wenigstens eine quer zur Längsachse des ersten und des zweiten Rohres erstreckte Verschraubung aneinander gesichert werden.

## Claims

1. Method for producing a screw foundation (1) for fastening elements in a foundation soil, in which at least a first cylindrical tube (5) is provided as a first starting form and the first tube (5) adjacent to a front insertion end (1b) is provided at least in some areas with a thread-like outer contour (4) for screwing into the foundation soil, wherein a star-shaped contour (2) with internal toothing and external toothing (2a, 2b) is shaped-in by reshaping into a rear end (1a) of the first tube (5), wherein, in a first step, a star-shaped pre-contour (2') is shaped-in radially from the outside against a star-shaped counter-form (6a) arranged inside the tubular end (1a) and, in a second step, the star-shaped pre-contour (2') is shaped-out radially from the outside to the star-shaped contour (2) without an inner counter-form.

2. Method according to claim 1,
**characterized in**
**that** the star-shaped pre-contour (2') and the star-shaped contour (2) at the rear end (1a) of the first tube (5) are shaped-in by a plurality of reshaping tools (6) arranged on a common circumference and uniformly radially adjustable.

3. Method according to claim 1 or 2,
**characterized in**
**that** the star-shaped contour (2) is formed conically tapering from the rear end (1a) in the axial longitudinal direction of the first tube (5).

4. Method according to one or more of claims 1 to 3,
**characterized in**
**that** the rear tubular end (1a) is radially expanded before the star-shaped pre-contour (2') is shaped-in.

5. Method according to one or more of claims 1 to 4,
**characterized in**
**that** a conical front section (1d) tapering to an insertion tip (3) is shaped onto the first tube (5) using a non-cutting process, wherein the front section (1d) is formed at least in some areas with the thread-like outer contour (4) for screwing into the foundation soil.

6. Method according to claim 5,
**characterized in**
**that** the front section (1d) is produced by compression molding with or without heat application.

7. Method according to one or more of claims 1 to 6,
**characterized in**
**that** at least a second cylindrical tube is provided as a second starting form and that a star-shaped contour (8, 9) with internal toothing and external toothing (8a, 8b, 9a, 9b) is shaped-in into each of the two tubular ends (7a, 7b) of the second tube, wherein, in a first step, respectively a star-shaped pre-contour is shaped-in radially from the outside against a star-shaped counter-form arranged inside the tubular end, and, in a second step, respectively the star-shaped pre-contour is shaped-out radially from the outside to the star-shaped contour without an inner counter-form, wherein the contour (9) at one end (7b) of the second tube corresponds to the contour (2) at the rear end (1a) of the first tube, and the contour (8) at the other end (7a) of the second tube is designed such that the other end (7a) of the second tube can be inserted into or onto the rear end (1a) of the first tube in a force-fitting and/or form-fitting manner.

8. Method according to claim 7,
**characterized in**
**that** the sticked into each other ends (1a, 7a) of the first and second tubes are secured to each other in the area of the star-shaped contours (2, 8) by at least one screw connection extending transversely to the longitudinal axis of the first and second tubes.

## Revendications

1. Procédé de fabrication d'une fondation vissée (1) pour la fixation d'éléments dans un sol, dans lequel au moins un premier tube cylindrique (5) est fourni comme première forme initiale et le premier tube (5) est muni, au moins par endroits, d'un contour extérieur fileté (4) adjacent à une extrémité avant (1b) pour être vissé dans le sol, dans lequel un contour (2) en forme d'étoile, présentant une denture intérieure et extérieure (2a, 2b), est formé par déformation dans une extrémité arrière (1a) du premier tube (5), dans lequel dans une première etape, un pré-contour (2') en forme d'étoile est formé radialement depuis l'extérieur contre un contre-moule (6a) en forme d'étoile disposé à l'intérieur de l'extrémité tubulaire (1a) et, dans une deuxième étape, le pré-contour (2') en forme d'étoile est formé radialement de l'extérieur sans contre-moule intérieure pour obtenir le contour (2) en forme d'étoile.

2. Procédé selon la revendication 1,
**caractérisé en ce que**
le pré-contour (2') en forme d'étoile et le contour (2) en étoile à l'extrémité arrière (1a) du premier tube (5) sont formés par plusieurs outils de formage (6) disposés sur une circonférence commune et pouvant être avancés radialement de manière uniforme.

3. Procédé selon la revendication 1 ou 2,
**caractérisé en ce**
**que** le contour (2) en forme d'étoile est formé de manière conique à partir de l'extrémité arrière (1a) dans la direction longitudinale axiale du premier tube (5).

4. Procédé selon une ou plusieurs des revendications 1 à 3,
**caractérisé en ce**
**que** l'extrémité tubulaire arrière (1a) est élargie radialement avant le formage du pré-contour (2') en forme d'étoile.

5. Procédé selon une ou plusieurs des revendications 1 à 4,
**caractérisé en ce**
**qu'**une partie avant conique (1d) convergeant vers une pointe d'introduction (3) est formée sans enlèvement de copeaux sur le premier tube (5), dans lequel la partie avant (1d) étant pourvue, au moins par endroits, du contour extérieur fileté (4) destiné à être vissé dans le sol.

6. Procédé selon la revendication 5,
**caractérisé en ce**
**que** la partie avant (1d) est produite par moulage par compression avec ou sans application de chaleur.

7. Procédé selon une ou plusieurs des revendications 1 à 6,
**caractérisé en ce**
**qu'**au moins un deuxième tube cylindrique est fourni comme deuxième forme initiale et qu'un contour (8, 9) en forme d'étoile, présentant une denture intérieure et extérieure (8a, 8b, 9a, 9b), est formé dans chacune des deux extremités tubulaires (7a, 7b), dans lequel dans un première etape, respectivement un pré-contour en forme d'étoile est formé radialement depuis l'extérieur contre un contre-moule en forme d'étoile disposé à l'intérieur de l'extrémité tubulaire et, dans une deuxième étape, respectivement le pré-contour en forme d'étoile est formé radialement de l'extérieur sans contre-moule intérieure en forme d'etoile pour obtenir le contour en forme d'étoile, dans lequel le contour (9) à une extrémité (7b) du deuxième tube correspondant au contour (2) à l'extrémité arrière (1a) du premier tube et le contour (8) à l'autre extrémité (7a) du deuxième tube est formé de telle sorte que l'autre extrémité (7a) du deuxième tube peut être enfichée par adhérence et/ou par complémentarité de forme dans ou sur l'extrémité arrière (1a) du premier tube.

8. Procédé selon la revendication 7,
**caractérisé en ce**
**que** les extrémités emboîtées (1a, 7a) du premier et du deuxième tube sont fixées l'une à l'autre dans la zone des contours en forme d'étoile (2, 8) par au moins un raccord vissé s'étendant transversalement à l'axe longitudinal du premier et du deuxième tube.
